# EUROPEAN PATENT APPLICATION

(11) **EP 2 965 857 A1**
(43) Date of publication of application: **13.01.2016**
(21) Application number: 14760921.8
(22) Date of filing: 24.02.2014
(51) Int. Cl.: B23K 35/30, B23K 9/00, B23K 9/23, B23K 35/368

(54) **WELDED METAL AND WELDED STRUCTURE PROVIDED WITH SAME**

(30) Priority: 08.03.2013 JP 2013047153
(71) Applicant: Kabushiki Kaisha Kobe Seiko Sho (Kobe Steel, Ltd.), Kobe-shi, Hyogo 651-8585 (JP)
(72) Inventor: OKAZAKI, Yoshitomi, Hyogo 651-2271 (JP); NAKO, Hidenori, Hyogo 651-2271 (JP); KOCHI, Takuya, Hyogo 651-2271 (JP); URUSHIHARA, Wataru, Hyogo 651 - 2271 (JP); KAWASAKI, Hiroyuki, Kanagawa 251-8551 (JP); HAN, Peng, Kanagaw 251-8551 (JP); KITAGAWA, Yoshihiko, Kanagawa 251-8551 (JP)
(74) Representative: Müller-Boré & Partner Patentanwälte PartG mbB
(86) International application number: PCT/JP2014/054345
(87) International publication number: WO 2014/136601

(57) **Abstract**

This welded metal contains 0.02 - 0.10% of C, 0.10 - 0.60% of Si, 0.90 - 2.5% of Mn, 0.20 - 2.00% of Ni, 0.05 - 1.0% of Cr, 0.10 - 1.50% of Mo, 0.040 - 0.15% of Ti, 0.0010 - 0.0050% of B, 0.030 - 0.100% of 0 and 0.015% or less (excluding 0%) of N, with the balance made up of iron and unavoidable impurities. The average circle-equivalent diameter of carbides having a circle-equivalent diameter of 0.40 µm or more among the carbides present in the grain boundary of this welded metal is 0.75 µm or less. Consequently, the present invention provides: a welded metal which exhibits excellent low-temperature toughness at lower temperatures, while having high strength after SR annealing, even in cases where gas sealed arc welding using a flux cored wire and having excellent work efficiency is applied; and a welded structure which is provided with this welded metal.

## Description

### Technical Field

The present invention relates to a weld metal applied to welded structures such as offshore structures and a welded structure provided with the weld metal and it particularly relates to a weld metal improved with strength after stress relief annealing and low temperature toughness, as well as a welded structure provided with the weld metal.

### Background Art

In offshore structures (oil platforms) constructed during drilling and production of offshore oil fields, size of equipment has been increased and development of oil fields in cold districts has been extended. Accordingly, it is required for steel plates and welding materials applied to the offshore structures to have high strength and low temperature toughness together at a high level. Particularly, in the weld metal portion of the weld structure, an annealing treatment (stress relief annealing: SR annealing) for a long time is applied intending to relieve stress after welding operation, and it is pointed out that the strength and the toughness are sometimes deteriorated by SR annealing. In view of the above, it has been demanded for a technique capable of sufficiently ensuring high strength after the SR annealing and excellent low temperature toughness at -40°C.

Meanwhile, when the welded structure described above is constructed, various welding methods are applied, and it is considered that application of gas shield arc welding using a flux cored wire (FCW: hereinafter sometimes referred to as "fluxed wire") is preferred in view of operation efficiency.

Various proposals have been made so far as a technique taking notice on the strength and the low temperature toughness of the weld metal.

For example, Patent Literature 1 ensures high strength and excellent low temperature toughness for the weld metal after SR annealing by controlling the amount and the number density of carbides. However, weld metals formed by applying submerged arc welding are mainly intended in such technique and the submerged arc welding involves some problems that the operation position is restricted and the method cannot cope with all position welding which is inevitable in large-sized steel structures.

Patent Literature 2 ensures high strength and excellent low temperature toughness after the SR annealing by finely controlling the size of carbides that tend to be coarsened. In this technique, however, the toughness evaluation temperature is somewhat high as -30°C and it cannot be said that the toughness at -40°C is ensured.

Patent Literature 3 proposes welding materials capable of ensuring high strength and excellent low temperature toughness after the SR annealing by controlling the contents of C, Si, Mn, Mo, Ti, Ni, Al, and O. However, the toughness evaluation temperature is somewhat high as -29°C and it cannot be said that toughness at a lower temperature of -40°C is ensured. Further, as the welding method to be applied use of TIG welding of low operation efficiency is intended, and, a further improvement has been demanded with a view point of operation cost.

Patent Literature 4 discloses welding materials capable of ensuring high strength and excellent low temperature toughness after the SR annealing by adding appropriate amounts of Cr, Mo, Cu, Ti, B, etc. and controlling the composition of a slag material in a fluxed wire capable of improving the welding efficiency. However, the toughness evaluation temperature is -30°C, which is somewhat high and it cannot be said that toughness at a lower temperature of -40°C is ensured.

Patent Literature 5 proposes welding materials capable of ensuring high strength and excellent low temperature toughness after the SR annealing by controlling the form of grain boundary carbides. However, the toughness evaluation temperature is -30°C, which is somewhat high, and it cannot be said that a low temperature toughness at a lower temperature of -40°C is ensured.

### Citation List

### Patent Literature

Patent Literature 1: Japanese Unexamined Patent Application Publication No. 2011-219821
Patent Literature 2: Japanese Unexamined Patent Application Publication No. 2010-227945
Patent Literature 3: Japanese Unexamined Patent Application Publication No. 2006-239733
Patent Literature 4: Japanese Unexamined Patent Application Publication No. H09(1997)-253886
Patent Literature 5: Japanese Unexamined Patent Application Publication No. 2012-166203

### Summary of Invention

### Technical Problem

The present invention has been accomplished in view of the foregoing situations and intends to provide a weld metal capable of providing high strength and excellent low temperature toughness together after the SR annealing, as well as a welded structure provided with a weld metal even in a case of applying gas shield arc welding using flux cored wire of excellent operation efficiency.

### Solution to Problem

The weld metal according to the present invention capable of solving the subjects described above has a feature including: C: 0.02 to 0.10% ("mass%" here and hereinafter), Si: 0.10 to 0.60%, Mn: 0.90 to 2.5%, Ni: 0.20 to 2.00%, Cr: 0.05 to 1.0%, Mo: 0.10 to 1.50%, Ti: 0.040 to 0.15%, B: 0.0010 to 0.0050%, O: 0.030 to 0.100% and N: 0.015% or less (excluding 0%) respectively, with the remainder consisting of iron and unavoidable impurities, in which an average circle equivalent diameter of carbides having a circle equivalent diameter of 0.40 µm or more among the carbides present in the grain boundary of the welded metal is 0.75 µm or less.

The term "circle equivalent diameter" as used herein means a diameter of a circle with the same area as that of a carbide particle, taking into consideration the size of the carbide particle seen on an observation surface under a microscope (for example, transmission electron microscope (TEM)).

The weld metal of the present invention further contains preferably as other elements, (a) at least one of Cu: 1.0% or less (not including 0%) and V: 0.40% or less (not including 0%), and (b) Al: 0.030% or less (not including 0%), whereby the characteristic of the weld metal is further improved in accordance with the type of elements to be contained.

The present invention also includes a welded structure provided with the weld metal described above.

### Advantageous Effects of Invention

According to the present invention, since the average circle equivalent diameter of carbides at a predetermined size present in the weld metal is defined together with chemical composition, the present invention can achieve a weld metal having a sufficient strength and also excellent in low temperature toughness even after the SR annealing.

### Brief Description of Drawings

[Fig. 1] is a schematic explanatory view illustrating a groove shape when a weld metal is prepared.
[Fig. 2A] is a first conceptional view for explaining a method of calculating an average circle equivalent diameter of grain boundary carbides.
[Fig. 2B] is a second conceptional view for explaining a method of calculating the average circle equivalent diameter of grain boundary carbides.
[Fig. 2C] is a third conceptional view for explaining a method of calculating the average circle equivalent diameter of grain boundary carbides.
[Fig. 3] is an explanatory view illustrating the shape of a test specimen when a tensile test is performed.
[Fig. 4] is a schematic explanatory view illustrating a position of sampling a Charpy impact test piece.

### Description of Embodiments

The present inventors have made studies from various points of view for achieving a weld metal capable of providing high strength and excellent low temperature toughness after SR annealing. As a result, it has been found that various characteristics described above can be provided together by controlling the chemical composition of the weld metal while adding Mo having an effect of suppressing coarsening of grain boundary carbides and annealing and softening by fine precipitation in the grains and defining the average circle equivalent diameter of carbides of predetermined size formed over the grain boundaries of the weld metal during welding (such carbides are sometimes referred to as "grain boundary carbides"), thereby accomplishing the present invention.

That is, in the present invention, the high strength and the low temperature toughness can be provided together by properly controlling the chemical composition of the weld metal while controlling the Mo content to 0.10% or more and defining the average circle equivalent diameter of the grain boundary carbides having a circle equivalent diameter of 0.40 µm or more to 0.75 µm or less.

In the present invention, control of the grain boundary carbides is extremely important. Generally, the toughness is lowered as the size of carbides formed during the SR annealing becomes greater, and the grain boundary carbides formed in the grain boundaries tend to be coarsened more compared with the carbides formed within the grains. Further, since prior austenite grain boundaries are embrittled by annealing (tempering embrittlement), cracking tends to be developed preferentially in a Charpy test for evaluating the toughness. In this case, when coarse carbides are present in the prior austenite grain boundaries, since cracking tends to occur therefrom as starting points, the toughness value of the weld metal is remarkably deteriorated during the SR annealing together with the tempering embrittlement phenomenon. Accordingly, in order to ensure excellent low temperature toughness after the SR annealing, it is an important constitution to suppress the tempering embrittlement and keep the size of grain boundary carbides fine.

With such a point of view, in the present invention, an average circle equivalent diameter of carbides having a circle equivalent diameter of 0.40 µm or more among carbides present in the grain boundaries of the weld metal is defined as 0.75 µm or less. The average circle equivalent diameter is preferably 0.70 µm or less and, more preferably, 0.65 µm or less. The size of the grain boundary carbides is sometimes refined extremely and the average circle equivalent diameter of the grain boundary carbides cannot be evaluated even by the method of evaluating the grain boundary carbides to be described later. Such a case is also included in the present invention that "the average circle equivalent diameter of carbides having a circle equivalent diameter of 0.40 µm or more is 0.75 µm or less".

In the weld metal of the present invention, it is also an important constitution to properly control the chemical composition thereof and the reason for defining the range thereof is as described below.

### (C: 0.02 to 0.10%)

C is an essential element for ensuring the strength of the weld metal after the SR annealing. If the C content is less than 0.02%, a predetermined strength cannot be obtained. However, since an excess C content causes lowering of the toughness due to coarsening of the grain boundary carbides during the SR annealing, the C content is defined as 0.10% or less. A preferred lower limit of the C content is 0.03% or more (more preferably 0.04% or more) and a preferred upper limit thereof is 0.08% or less (more preferably, 0.07% or less).

### (Si: 0.10 to 0.60%)

Si is an essential element for ensuring the strength of the weld metal after the SR annealing. If the Si content is less than 0.10%, a predetermined strength cannot be obtained. However, since an excess Si content promotes tempering embrittlement during the SR annealing thereby causing lowering of the toughness, the Si content is defined as 0.60% or less. A preferred lower limit of the Si content is 0.12% or more (more preferably, 0.15% or more), and a preferred upper limit thereof is 0.50% or less (more preferably, 0.45% or less).

### (Mn: 0.90 to 2.5%)

Mn is an effective element for forming oxides as nucleation sites for fine microstructure during welding thereby improving the strength and the toughness of the weld metal. In order to provide such effects, the Mn content should be 0.90% or more. However, since an excess Mn content promotes tempering embrittlement during the SR annealing to cause lowering of the toughness, it should be 2.5% or less. A preferred lower limit of the Mn content is 1.1% or more (more preferably, 1.3% or more) and a preferred upper limit thereof is 2.2% or less (more preferably, 2.0% or less).

### (Ni: 0.20 to 2.00%)

Ni is an effective element for improving the toughness of the weld metal. In order to provide such an effect, the Ni content should be 0.20% or more. However, since an excess Ni content lowers an upper shelf energy in a Charpy test and a predetermined toughness cannot obtained after the SR annealing, the Ni content should be 2.00% or less. A preferred lower limit of the Ni content is 0.4% or more (more preferably, 0.6% or more), and a preferred upper limit thereof is 1.80% or less (more preferably, 1.60% or less).

### (Cr: 0.05 to 1.0%)

Cr is an element having an effect of refining grain boundary carbides during the SR annealing. In order to provide such an effect, the Cr content should be 0.05% or more. However, since an excess Cr content makes grain boundary carbides coarser to rather lower the toughness, it should be 1.0% or less. A preferred lower limit of the Cr content is 0.20% or more (more preferably, 0.30% or more), and a preferred upper limit thereof is 0.80% or less (more preferably, 0.70% or less).

### (Mo: 0.10 to 1.50%)

Mo is an important element for suppressing coarsening and annealing and softening of the grain boundary carbides. In order to achieve such effects, the Mo content should be 0.10% or more. However, since an excess Mo content rather lowers the toughness due to excess increase in the strength during the SR annealing, it should be 1.50% or less. A preferred lower limit of the Mo content is 0.20% or more (more preferably, 0.30% or more) and a preferred upper limit thereof is 1.2% or less (more preferably, 1.0% or less).

### (Ti: 0.040 to 0.15%)

Ti is an effective element of forming oxides as nucleation sites for fine microstructures during welding and improving the toughness of the weld metal. In order to achieve such effects, the Ti content should be 0.040% or more. However, since an excess Ti content forms fine carbides during the SR annealing and lowers the toughness due to excess increase of the strength, it should be 0.15% or less. A preferred lower limit of the Ti content is 0.050% or more (more preferably, 0.055% or more) and a preferred upper limit thereof is 0.110% or less (more preferably, 0.090% or less).

### (B: 0.0010 to 0.0050%)

B is an effective element for suppressing formation of grain boundary ferrites that give an undesired effect on the strength and the toughness of the weld metal. In order to achieve such an effect, the B content should be 0.0010% or more. However, since an excess B content increases the strength excessively to cause lowering of the toughness, it is defined as 0.0050% or less. A preferred lower limit of the B content is 0.0012% or more (more preferably, 0.0015% or more) and a preferred upper limit thereof is 0.0045% or less (more preferably, 0.0040% or less).

### (O: 0.030 to 0.100%)

O is an effective element for forming oxides as nucleation sites for fine microstructures during welding and improving the toughness of the weld metal. In order to achieve such effects, the O content should be 0.030% or more. However, since if the O content is excessive as more than 0.100%, this coarsens the oxides to rather lower the toughness. A preferred lower limit of the O content is 0.035% or more (more preferably, 0.040% or more), and a preferred upper limit thereof is 0.080% or less (more preferably, 0.060% or less).

### (N: 0.015% or less (not including 0%))

N is an element inevitably contained in the weld metal. It is industrially impossible to reduce the content to 0%. However, since an excess N content gives an undesired effect on the toughness, it should be 0.015% or less. A preferred upper limit of the N content is 0.010% or less (more preferably, 0.008% or less).

The contained elements defined in the present invention are as described above and the remainder consists of iron and unavoidable impurities. For the unavoidable impurities, intrusions of elements (for example, P, S, Sn, etc.) which are carried in depending on the states of raw materials, materials, production equipment, etc. may be permitted. Among the unavoidable impurities, since P, in particular, is an element of remarkably promoting tempering embrittlement during the SR annealing, it is preferred to control the element at least to 0.010% or less.

In the weld metal of the present invention, it is preferred to further incorporate, as other elements, (a) at least one of Cu: 1.0% or less (not including 0%), and V: 0.40% or less (not including 0%), (b) Al: 0.030% or less (not including 0%), etc. and the characteristics of the weld metal are further improved in accordance with the type of the elements to be contained. The reasons for defining the ranges when such elements are incorporated are as described below.

### (At least one of Cu: 1.0% or less (not including 0%) and V: 0.40% or less (not including 0%))

Cu is a useful element for ensuring the strength of the weld metal but an excess content increases the strength excessively due to fine precipitation during the SR annealing to cause lowering of the toughness. With the view point described above, when Cu is contained, it is preferably 1.0% or less (more preferably, 0.80% or less). For effectively obtaining the effect by the incorporation of Cu, the content is preferably 0.05% or more (preferably, 0.10% or more).

On the other hand, V is an effective element for forming fine carbides during the SR annealing thereby improving the strength but an excess content increases the strength excessively to cause lowering of the toughness. With the view point described above, when V is contained, it is preferably, 0.40% or less (more preferably, 0.30% or less). For effectively providing the effect by the incorporation of V, the content is preferably 0.05% or more (more preferably, 0.10% or more).

### (Al: 0.030% or less (not including 0%))

Al is an useful element for forming oxides as nucleation sites for fine microstructures during welding thereby improving the strength and the toughness of the weld metal. However, if Al content is excessive as more than 0.030%, the oxides are coarsened to rather lower the toughness. A preferred lower limit of the Al content is 0.005% or more (more preferably, 0.010% or more), and a preferred upper limit thereof is 0.025% or less (more preferably, 0.020% or less).

As the welding method for obtaining the weld metal of the present invention, a gas shield arc welding using a flux cored wire (FCW) is intended to use and by the use of such arc welding method, the operation efficiency during welding is also improved.

For achieving the weld metal of the present invention, it is necessary to properly control the welding materials and welding conditions. Naturally, the components of welding materials undergo restriction by necessary weld metal components and, in order to obtain a predetermined carbide form, welding conditions and components of welding materials have to be controlled properly.

Preferred welding conditions in the gas shield arc welding using the flux cored wire (FCW) include a welding heat input of 2.5 kJ/mm or less and a preheating and interpass temperature during welding of 180°C or lower. Further, the ratio between the amount of metallic Si and the amount of SiO₂ (metallic Si/SiO₂) in the welding materials used (fluxed wire) is preferably 0.90 or more.

If the heat input in the gas shield arc welding is more than 2.5 kJ/mm, cooling rate during welding is lowered failing to obtain a predetermined strength and, concurrently, carbides are formed in the course of cooling and are grown during the SR annealing failing to obtain a desired grain boundary carbide form. As a result, the toughness after the SR annealing is lowered. Smaller weld heat input is more preferred and it is preferably 2.0 kJ/mm and, more preferably, 1.6 kJ/mm or less. The lower limit of the weld heat input is preferably about 0.7 kJ/mm or more considering the operation efficiency during welding.

If the preheating and interpass temperature exceeds 180°C, the cooling rate during welding lowers and not only a predetermined strength cannot be obtained but also carbides are formed in the course of cooling and are grown during the SR annealing failing to obtain a desired grain boundary carbide form. As a result, the toughness after the SR annealing is lowered. The preheating and interpass temperature is preferably 160°C or lower. With a view point of suppressing the low temperature cracking, the interpass temperature is preferably 100°C or higher and, more preferably, 120°C or higher.

Further, if the ratio between the amount of metallic Si and the amount of SiO₂ (metallic Si/SiO₂) in the welding materials (flux cored wire) is less than 0.90, solute Si becomes insufficient to make the carbides unstable and increase the size of the grain boundary carbides, whereby the average circle equivalent diameter of the grain boundary carbides having a circle equivalent diameter of 0.40 µm or more can no longer be maintained to 0.75 µm or less. The ratio (metallic Si/SiO₂) is more preferably 0.93 or more and, further preferably, 1.00 or more. The upper limit of the ratio (metallic Si/SiO₂) is preferably about 3.0 or less (more preferably, 2.5 or less) with a view point of work efficiency during welding.

The SR annealing conditions (temperature, time) may be in accordance with the condition employed so far, and the conditions are preferably set as described below with the view point of controlling the grain boundary carbides.

If the SR annealing temperature exceeds 680°C, coarsening of the grain boundary carbides during the SR annealing is promoted failing to obtain a desired grain boundary carbide form. As a result, the toughness after the SR annealing tends to be lowered. In view of the above, the SR annealing temperature is preferably 680°C or lower and, more preferably, 650°C or lower. The lower limit of the SR annealing temperature is preferably 580°C or higher considering the stress relieving effect during welding.

Referring to the SR annealing time, if it exceeds 12 hours (hr), coarsening of the grain boundary carbides during the SR annealing is promoted failing to obtain a desired grain boundary carbide form. As a result, the toughness after the SR annealing tends to be lowered. In view of the above, the SR annealing time is preferably 12 hours or less and, more preferably, 10 hours or less. The lower limit of the annealing temperature is preferably 2 hours or more considering the stress relieving effect during welding.

When the weld metal is formed in accordance with the conditions described above, a weld metal having a sufficient strength and providing excellent low temperature toughness is obtained and a welded structure provided with such weld metal can be attained.

### Example

Now, the present invention will be described in details with reference to examples. However, the present invention is not limited to the following examples but can be practiced with various modifications and changes adaptable to the purport described above and to be described below, and any of them belongs to the technical scope of the present invention.

Flux cored wires each having a wire diameter φ of 1.2 mm and a flux packing density of 15.5% were prepared (chemical composition is as shown in the following Tables 1 and 2) and characteristics were evaluated as described below.

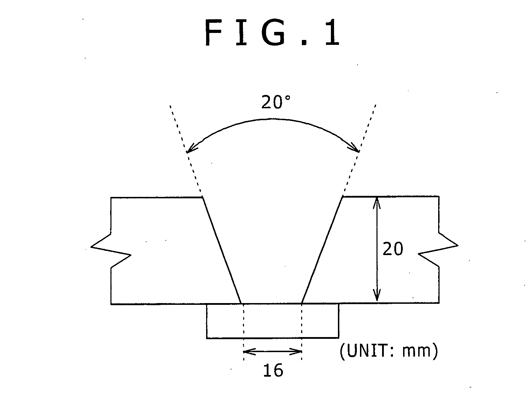

A SM490A steel plate (base plate) was fabricated into a groove shape illustrated in Fig. 1, weld metals were prepared by gas shield arc welding under each of the welding conditions to be described later and, after applying a heat treatment (SR annealing), various characteristics were evaluated.

### (Welding Conditions)

Plate thickness of base plate: 20 mm
Groove angle: 20° (V-shape)
Root interval: 16 mm
Welding position: flat
Shield gas: gas mixture of 20% CO₂ - 80% Ar (flow rate: 25L/min) Heat input condition
a) 1.0 kJ/mm (230 A-25 V, 5.7 mm/sec),
b) 1.6 kJ/mm (280 A-29 V, 5.1 mm/sec),
c) 2.0 kJ/mm (280 A-29 V, 4.1 mm/sec),
d) 2.6 kJ/mm (300 A-31 V, 3.6 mm/sec),
Preheating and interpass temperature: 100 to 190°C,
Stacking method: 6 layer-12 pass
SR annealing temperature: 600 to 680°C,
SR annealing time: 2 to 10 hours.

### (Measurement of Average Circle equivalent diameter of Grain Boundary Carbides having a Circle equivalent diameter of 0.40 µm or more)

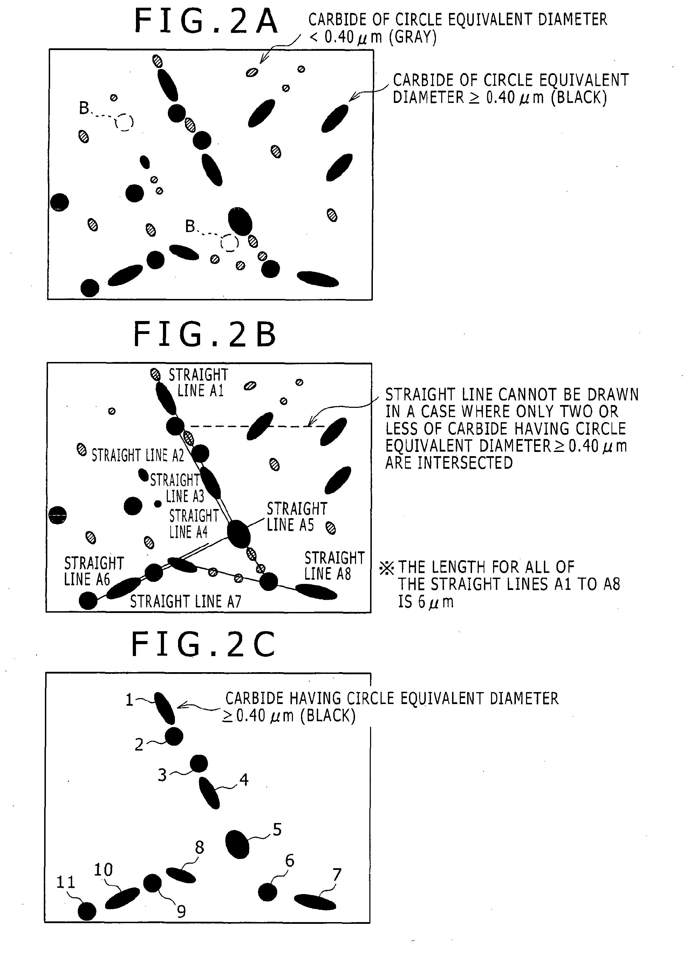

Test specimens for replica TEM observation were sampled from a central portion of a weld metal in a final pass after SR annealing and then four images each having a field of view of 13.3 x 15.7 µm at a factor of 7500 magnifications were taken. By using an image analysis software ("Image-ProPlus" manufactured by Media Cybernetics Co.), carbides having a circle equivalent diameter of 0.40 µm or more were selected and then an average circle equivalent diameter of grain boundary carbides was calculated. The carbide form was analyzed by the following method.
(1) Straight lines Ai (i = 1, 2, 3, ---- n, n: total number of straight lines) each having a length of 6 µm and intersecting at least 3 carbides each having an circle equivalent diameter of 0.40 µm or more are selected (Figs. 2A, 2B). In Fig. 2A, a region indicated by a broken circle (indicated by "B" in the drawing) is shown assuming the size of a circle having a 0.40 µm diameter (as a reference for the size of a target carbide).
(2) Carbides each having a circle equivalent diameter of 0.40 µm or more and intersecting straight lines Ai are selected (Fig. 2C) and the average circle equivalent diameter is calculated by image analysis. Fig. 2C illustrates selected carbides by reference numerals 1 to 11. A straight line A1 illustrated in Fig. 2B is a straight line intersecting carbides 1, 2, and 3. In the same manner, a straight line A2 is a straight line intersecting carbides 2, 3, and 4, a straight line A3 is a straight line intersecting carbides 3, 4, and 5, a straight line A4 is a straight line intersecting carbides 4, 5, and 6, a straight line A5 is a straight line intersecting carbides 5, 8, and 9, a straight line A6 is a straight line intersecting carbides 8, 9, 10, a straight line A7 is a straight line intersecting carbides 9, 10, and 11, and a straight line A8 is a straight line intersecting carbides 8, 6, and 7, respectively.

In a case where the size of carbides is extremely fine and a straight line of 6 µm length intersecting at least three carbides having a circle equivalent diameter of 0.40 µm or more cannot be drawn, this is evaluated as satisfying "average circle equivalent diameter is 0.75 µm or less" (indicated as "⊚" in the following Tables 5 and 6).

### (Strength)

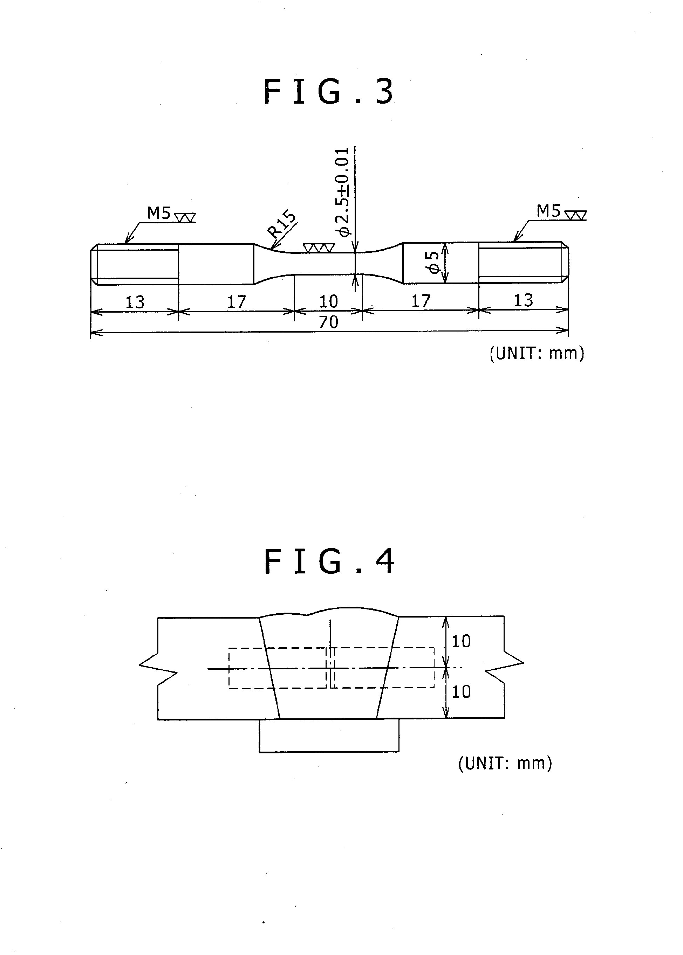

Test specimens according to a tensile test specimen (JIS Z 2242: 2005) were sampled from a central portion of a plate thickness of the weld metal subjected to a SR annealing treatment in parallel with the welding direction (Fig. 3) and a tensile strength (TS) was measured according to JIS Z 2241:1998 at a room temperature (25°C). Tensile strength (TS) > 620 MPa was evaluated as excellent in the strength.

### (Low Temperature Toughness)

Charpy impact test pieces (JIS Z 3111 No. 4 V-notch test specimen) were sampled in perpendicular to the weld line direction from a central portion of the plate thickness of the weld metal subjected to the SR annealing treatment based on Fig. 4 and measured for absorption energy at -40°C (vE-₄₀) according to JIS Z 2242:2005, and those having an average value for three times exceeding 60J were evaluated as being excellent for the low temperature toughness.

Chemical compositions of various welding materials (fluxed wire) used when forming the weld metal are shown in the following Tables 1 and 2 (welding materials Nos. F1 to 51). Further, the chemical compositions of the formed weld metals are shown together with welding conditions (welding materials No., heat input condition, preheating and interpass temperature) in the following Tables 3 and 4 (Test Nos. 1 to 51). Further, the result of evaluated characteristics for each of the weld metals (average circle equivalent diameter of carbides, tensile strength (TS), and low temperature toughness (vE-₄₀)) are shown together with SR annealing conditions (SR temperature, SR time) in the following Tables 5 and 6 (Test Nos. 1 to 51). In the Tables 5 and 6, those indicated as "⊚" in the item for the carbide average circle equivalent diameter mean that the carbide size is extremely fine and the average circle equivalent diameter cannot be measured by the evaluation method described above, but they satisfy "equivalent average circle equivalent diameter of 0.75 µm or less".

**[Table 1]**

| Welding material No. | Chemical composition of welding material (mass%) | | | | | | | | | | | | |
|---|---|---|---|---|---|---|---|---|---|---|---|---|---|
| | C | Metallic Si | SiO₂ | Mn | Ni | Cr | Mo | Ti | B | Cu | V | Others* | Metallic Si/SiO₂ |
| F1 | 0.05 | 0.31 | 0.24 | 2.2 | 0.9 | 0.3 | 0.4 | 4.25 | 0.008 | - | - | 91 | 1.29 |
| F2 | 0.05 | 0.31 | 0.24 | 1.9 | 0.9 | 0.5 | 0.4 | 4.10 | 0.008 | - | - | 92 | 1.29 |
| F3 | 0.05 | 0.31 | 0.24 | 2.2 | 0.9 | 0.7 | 0.5 | 4.25 | 0.009 | - | - | 91 | 1.29 |
| F4 | 0.05 | 0.30 | 0.21 | 2.5 | 1.0 | 0.3 | 0.4 | 4.10 | 0.008 | - | - | 91 | 1.43 |
| F5 | 0.05 | 0.30 | 0.21 | 2.2 | 0.9 | 0.5 | 0.7 | 4.10 | 0.008 | - | - | 91 | 1.43 |
| F6 | 0.05 | 0.30 | 0.21 | 2.5 | 1.8 | 0.7 | 0.3 | 4.10 | 0.008 | - | - | 90 | 1.43 |
| F7 | 0.06 | 0.31 | 0.24 | 2.0 | 0.9 | 0.3 | 0.4 | 4.25 | 0.008 | 0.2 | - | 91 | 1.29 |
| F8 | 0.05 | 0.40 | 0.21 | 2.2 | 1.0 | 0.5 | 0.4 | 4.25 | 0.008 | 0.5 | - | 90 | 1.90 |
| F9 | 0.05 | 0.31 | 0.24 | 2.2 | 1.2 | 0.1 | 0.5 | 4.10 | 0.008 | - | 0.05 | 91 | 1.29 |
| F10 | 0.05 | 0.30 | 0.21 | 2.2 | 1.3 | 0.4 | 1.0 | 4.25 | 0.009 | - | - | 90 | 1.43 |
| F11 | 0.05 | 0.30 | 0.21 | 2.1 | 0.6 | 0.5 | 0.7 | 4.10 | 0.009 | - | - | 91 | 1.43 |
| F12 | 0.05 | 0.15 | 0.16 | 2.1 | 0.9 | 0.1 | 0.4 | 4.03 | 0.005 | - | - | 92 | 0.94 |
| F13 | 0.06 | 0.19 | 0.20 | 1.8 | 0.5 | 0.9 | 0.4 | 4.10 | 0.009 | - | 0.23 | 92 | 0.95 |
| F14 | 0.05 | 0.24 | 0.20 | 3.1 | 0.6 | 0.4 | 0.5 | 4.31 | 0.003 | - | - | 91 | 1.20 |
| F15 | 0.08 | 0.40 | 0.21 | 1.9 | 1.0 | 0.2 | 0.6 | 4.25 | 0.008 | 0.3 | - | 91 | 1.90 |
| F16 | 0.08 | 0.30 | 0.21 | 2.7 | 1.2 | 0.2 | 0.6 | 4.10 | 0.008 | - | - | 91 | 1.43 |
| F17 | 0.05 | 0.30 | 0.21 | 2.8 | 1.2 | 0.4 | 0.8 | 4.25 | 0.004 | - | 0.19 | 90 | 1.43 |
| F18 | 0.03 | 0.24 | 0.20 | 2.2 | 0.5 | 0.3 | 0.6 | 4.25 | 0.008 | - | - | 92 | 1.20 |
| F19 | 0.05 | 0.24 | 0.20 | 1.9 | 0.3 | 0.7 | 0.7 | 4.10 | 0.005 | 0.7 | - | 91 | 1.20 |
| F20 | 0.05 | 0.40 | 0.21 | 2.8 | 1.4 | 0.7 | 1.3 | 4.10 | 0.005 | - | - | 89 | 1.90 |
| F21 | 0.08 | 0.45 | 0.22 | 2.0 | 1.7 | 0.1 | 0.3 | 4.25 | 0.008 | - | - | 91 | 2.05 |
| F22 | 0.05 | 0.50 | 0.23 | 2.0 | 1.7 | 0.6 | 0.4 | 4.25 | 0.008 | - | - | 90 | 2.17 |
| F23 | 0.03 | 0.20 | 0.20 | 2.9 | 1.9 | 0.6 | 0.4 | 4.31 | 0.005 | 0.2 | 0.09 | 89 | 1.00 |
| F24 | 0.05 | 0.30 | 0.21 | 2.1 | 1.0 | 0.5 | 0.6 | 4.25 | 0.010 | - | - | 91 | 1.43 |
| F25 | 0.06 | 0.40 | 0.21 | 2.2 | 1.3 | 0.4 | 0.6 | 4.42 | 0.003 | - | - | 90 | 1.90 |
| F26 | 0.05 | 0.30 | 0.21 | 2.2 | 1.3 | 0.2 | 0.6 | 4.46 | 0.008 | - | - | 91 | 1.43 |

| | | | | | | | | | | | | | |
|---|---|---|---|---|---|---|---|---|---|---|---|---|---|
| * Remainder: Iron and unavoidable impurities | | | | | | | | | | | | | |

**[Table 2]**

| Welding material No. | Chemical composition of welding material (mass%) | | | | | | | | | | | | |
|---|---|---|---|---|---|---|---|---|---|---|---|---|---|
| | C | Metallic Si | SiO₂ | Mn | Ni | Cr | Mo | Ti | B | Cu | V | Others* | Metallic Si/SiO₂ |
| F27 | 0.05 | 0.30 | 0.21 | 2.7 | 1.4 | 0.3 | 1.1 | 4.37 | 0.008 | - | - | 90 | 1.43 |
| F28 | 0.05 | 0.20 | 0.20 | 2.2 | 1.7 | 0.2 | 0.6 | 4.25 | 0.008 | 0.8 | - | 90 | 1.00 |
| F29 | 0.05 | 0.40 | 0.21 | 2.9 | 1.4 | 0.2 | 0.5 | 4.10 | 0.005 | - | 0.33 | 90 | 1.90 |
| F30 | 0.06 | 0.31 | 0.24 | 2.2 | 1.0 | 0.3 | 0.3 | 4.25 | 0.008 | - | - | 91 | 1.29 |
| F31 | 0.06 | 0.31 | 0.24 | 2.2 | 1.0 | 0.5 | 0.3 | 4.25 | 0.008 | - | - | 91 | 1.29 |
| F32 | 0.05 | 0.30 | 0.21 | 2.0 | 1.7 | 0.4 | 0.4 | 4.25 | 0.004 | - | - | 91 | 1.43 |
| F33 | 0.06 | 0.28 | 0.20 | 2.1 | 1.5 | 0.3 | 0.5 | 4.25 | 0.005 | - | - | 91 | 1.40 |
| F34 | 0.05 | 0.24 | 0.27 | 2.2 | 1.4 | 0.2 | 0.5 | 4.10 | 0.005 | - | - | 91 | 0.89 |
| F35 | 0.05 | 0.31 | 0.24 | 2.0 | 1.0 | 0.2 | 0.7 | 4.25 | 0.005 | - | - | 91 | 1.29 |
| F36 | 0.06 | 0.30 | 0.21 | 2.2 | 0.9 | 0.2 | 0.3 | 4.31 | 0.008 | - | - | 92 | 1.43 |
| F37 | 0.01 | 0.40 | 0.21 | 3.7 | 1.0 | 0.4 | 0.5 | 4.10 | 0.009 | - | - | 90 | 1.90 |
| F38 | 0.11 | 0.30 | 0.21 | 1.9 | 0.7 | 1.1 | 0.9 | 4.25 | 0.005 | - | - | 91 | 1.43 |
| F39 | 0.05 | 0.14 | 0.15 | 2.6 | 1.5 | 0.1 | 0.5 | 4.31 | 0.008 | - | - | 91 | 0.93 |
| F40 | 0.05 | 0.20 | 0.20 | 1.7 | 0.2 | 0.2 | 1.0 | 4.25 | 0.008 | - | - | 92 | 1.00 |
| F41 | 0.05 | 0.65 | 0.23 | 2.2 | 1.0 | 0.6 | 0.6 | 4.10 | 0.009 | - | - | 91 | 2.83 |
| F42 | 0.06 | 0.30 | 0.21 | 2.2 | 1.2 | 0.1 | 0.4 | 4.25 | 0.011 | - | - | 91 | 1.43 |
| F43 | 0.05 | 0.30 | 0.21 | 1.9 | 1.1 | 0.2 | 0.2 | 4.25 | 0.005 | - | - | 92 | 1.43 |
| F44 | 0.05 | 0.30 | 0.21 | 2.8 | 1.0 | 0.2 | 0.9 | 4.25 | 0.002 | - | - | 90 | 1.43 |
| F45 | 0.07 | 0.24 | 0.20 | 2.2 | 1.3 | 0.2 | 1.5 | 4.25 | 0.008 | - | - | 90 | 1.20 |
| F46 | 0.06 | 0.31 | 0.24 | 2.1 | 2.0 | 0.4 | 0.4 | 4.25 | 0.008 | - | - | 90 | 1.29 |
| F47 | 0.06 | 0.31 | 0.24 | 2.1 | 1.0 | 0.4 | 0.4 | 3.89 | 0.008 | - | - | 92 | 1.29 |
| F48 | 0.06 | 0.40 | 0.21 | 2.1 | 1.3 | 0.4 | 0.8 | 4.76 | 0.008 | - | - | 90 | 1.90 |
| F49 | 0.05 | 0.20 | 0.20 | 2.1 | 0.9 | 0.2 | 0.5 | 4.31 | 0.008 | - | - | 92 | 1.00 |
| F50 | 0.05 | 0.40 | 0.21 | 2.2 | 1.0 | 0.3 | 0.6 | 4.25 | 0.008 | 1.1 | - | 90 | 1.90 |
| F51 | 0.05 | 0.30 | 0.21 | 2.2 | 1.5 | 0.2 | 0.8 | 4.25 | 0.008 | - | 0.43 | 90 | 1.43 |

| | | | | | | | | | | | | | |
|---|---|---|---|---|---|---|---|---|---|---|---|---|---|
| * Remainder: Iron and unavoidable impurities | | | | | | | | | | | | | |

**[Table 3]**

| Test No. | Welding material No. | Heat input condition | Preheating and interpass temperature (°C) | Chemical composition of weld metal ** (mass%) | | | | | | | | | | | | |
|---|---|---|---|---|---|---|---|---|---|---|---|---|---|---|---|---|
| | | | | C | Si | Mn | Ni | Cr | Mo | Ti | B | O | N | Cu | V | Al |
| 1 | F1 | b | 140 | 0.05 | 0.35 | 1.56 | 0.93 | 0.26 | 0.44 | 0.074 | 0.0035 | 0.049 | 0.0072 | | | |
| 2 | F2 | b | 140 | 0.05 | 0.35 | 1.21 | 0.88 | 0.47 | 0.38 | 0.059 | 0.0037 | 0.048 | 0.0065 | | | |
| 3 | F3 | b | 140 | 0.06 | 0.36 | 1.56 | 0.93 | 0.76 | 0.45 | 0.060 | 0.0039 | 0.053 | 0.0061 | | | |
| 4 | F4 | b | 160 | 0.05 | 0.31 | 1.78 | 1.05 | 0.25 | 0.40 | 0.051 | 0.0032 | 0.048 | 0.0058 | | | |
| 5 | F5 | a | 160 | 0.05 | 0.32 | 1.63 | 0.89 | 0.49 | 0.71 | 0.056 | 0.0033 | 0.046 | 0.0055 | | | |
| 6 | F6 | b | 160 | 0.06 | 0.32 | 1.77 | 1.76 | 0.73 | 0.36 | 0.054 | 0.0030 | 0.044 | 0.0068 | | | |
| 7 | F7 | b | 140 | 0.07 | 0.34 | 1.32 | 0.93 | 0.26 | 0.41 | 0.063 | 0.0032 | 0.052 | 0.0050 | 0.15 | | |
| 8 | F8 | b | 140 | 0.05 | 0.41 | 1.56 | 0.96 | 0.46 | 0.47 | 0.067 | 0.0031 | 0.051 | 0.0045 | 0.53 | | |
| 9 | F9 | a | 140 | 0.04 | 0.37 | 1.66 | 1.22 | 0.11 | 0.55 | 0.059 | 0.0033 | 0.048 | 0.0051 | | 0.04 | |
| 10 | F10 | b | 140 | 0.05 | 0.33 | 1.52 | 1.30 | 0.38 | 0.95 | 0.064 | 0.0036 | 0.055 | 0.0066 | | | 0.012 |
| 11 | F11 | a | 160 | 0.05 | 0.29 | 1.42 | 0.57 | 0.47 | 0.68 | 0.055 | 0.0040 | 0.054 | 0.0060 | | | |
| 12 | F12 | b | 140 | 0.05 | 0.12 | 1.44 | 0.92 | 0.15 | 0.38 | 0.043 | 0.0022 | 0.083 | 0.0057 | | | |
| 13 | F13 | b | 140 | 0.06 | 0.18 | 0.96 | 0.45 | 0.83 | 0.45 | 0.052 | 0.0038 | 0.049 | 0.0062 | | 0.22 | |
| 14 | F14 | c | 160 | 0.05 | 0.24 | 2.28 | 0.66 | 0.38 | 0.55 | 0.070 | 0.0011 | 0.053 | 0.0048 | | | |
| 15 | F15 | b | 180 | 0.08 | 0.38 | 1.22 | 1.05 | 0.20 | 0.61 | 0.068 | 0.0036 | 0.050 | 0.0066 | 0.32 | | 0.018 |
| 16 | F16 | a | 140 | 0.09 | 0.30 | 1.93 | 1.18 | 0.19 | 0.60 | 0.055 | 0.0031 | 0.062 | 0.0047 | | | |
| 17 | F17 | b | 100 | 0.05 | 0.32 | 2.05 | 1.22 | 0.42 | 0.78 | 0.061 | 0.0015 | 0.047 | 0.0052 | | 0.19 | |
| 18 | F18 | c | 140 | 0.02 | 0.24 | 1.50 | 0.50 | 0.24 | 0.63 | 0.063 | 0.0035 | 0.073 | 0.0059 | | | |
| 19 | F19 | b | 140 | 0.05 | 0.25 | 1.16 | 0.27 | 0.65 | 0.70 | 0.055 | 0.0019 | 0.055 | 0.0050 | 0.73 | | |
| 20 | F20 | b | 140 | 0.05 | 0.42 | 2.03 | 1.40 | 0.71 | 1.22 | 0.058 | 0.0021 | 0.049 | 0.0050 | | | |
| 21 | F21 | c | 160 | 0.08 | 0.46 | 1.34 | 1.71 | 0.07 | 0.25 | 0.061 | 0.0032 | 0.061 | 0.0050 | | | 0.026 |
| 22 | F22 | b | 140 | 0.05 | 0.53 | 1.27 | 1.69 | 0.67 | 0.38 | 0.062 | 0.0030 | 0.052 | 0.0047 | | | |
| 23 | F23 | a | 140 | 0.03 | 0.22 | 2.15 | 1.85 | 0.55 | 0.45 | 0.088 | 0.0021 | 0.050 | 0.0049 | 0.22 | 0.09 | |
| 24 | F24 | c | 140 | 0.06 | 0.30 | 1.45 | 1.05 | 0.47 | 0.61 | 0.068 | 0.0046 | 0.048 | 0.0042 | | | |
| 25 | F25 | b | 140 | 0.07 | 0.38 | 1.63 | 1.31 | 0.38 | 0.55 | 0.116 | 0.0012 | 0.060 | 0.0062 | | | |
| 26 | F26 | b | 140 | 0.05 | 0.31 | 1.50 | 1.28 | 0.21 | 0.57 | 0.133 | 0.0036 | 0.047 | 0.0095 | | | |

| | | | | | | | | | | | | | | | | |
|---|---|---|---|---|---|---|---|---|---|---|---|---|---|---|---|---|
| ** Remainder: Iron and unavoidable impurities | | | | | | | | | | | | | | | | |

**[Table 4]**

| Test No. | Welding material No. | Heat input condition | Preheating and interpass temperature (°C) | Chemical composition of weld metal ** (mass%) | | | | | | | | | | | | |
|---|---|---|---|---|---|---|---|---|---|---|---|---|---|---|---|---|
| | | | | C | Si | Mn | Ni | Cr | Mo | Ti | B | O | N | Cu | V | Al |
| 27 | F27 | c | 140 | 0.05 | 0.29 | 1.89 | 1.44 | 0.25 | 1.07 | 0.095 | 0.0032 | 0.053 | 0.0121 | | | |
| 28 | F28 | b | 160 | 0.05 | 0.21 | 1.47 | 1.72 | 0.18 | 0.32 | 0.061 | 0.0028 | 0.041 | 0.0078 | 0.83 | | |
| 29 | F29 | a | 140 | 0.05 | 0.41 | 2.10 | 1.43 | 0.22 | 0.45 | 0.055 | 0.0020 | 0.052 | 0.0041 | | 0.32 | |
| 30 | F30 | b | 140 | 0.06 | 0.37 | 1.51 | 1.03 | 0.26 | 0.23 | 0.067 | 0.0037 | 0.048 | 0.0060 | | | |
| 31 | F31 | b | 140 | 0.06 | 0.38 | 1.56 | 1.04 | 0.52 | 0.24 | 0.071 | 0.0027 | 0.050 | 0.0047 | | | |
| 32 | F32 | d | 140 | 0.05 | 0.31 | 1.34 | 1.65 | 0.43 | 0.40 | 0.063 | 0.0015 | 0.050 | 0.0050 | | | |
| 33 | F33 | b | 190 | 0.06 | 0.28 | 1.45 | 1.55 | 0.34 | 0.50 | 0.060 | 0.0021 | 0.048 | 0.0042 | | | |
| 34 | F34 | b | 120 | 0.05 | 0.32 | 1.51 | 1.42 | 0.22 | 0.49 | 0.057 | 0.0019 | 0.053 | 0.0057 | | | |
| 35 | F35 | c | 160 | 0.04 | 0.35 | 1.25 | 1.05 | 0.20 | 0.64 | 0.068 | 0.0025 | 0.057 | 0.0053 | | | |
| 36 | F36 | b | 160 | 0.06 | 0.32 | 1.66 | 0.88 | 0.18 | 0.31 | 0.072 | 0.0033 | 0.046 | 0.0062 | | | |
| 37 | F37 | c | 140 | 0.01 | 0.41 | 2.53 | 0.95 | 0.36 | 0.46 | 0.055 | 0.0041 | 0.043 | 0.0047 | | | |
| 38 | F38 | b | 140 | 0.11 | 0.31 | 1.18 | 0.68 | 1.05 | 0.83 | 0.062 | 0.0025 | 0.044 | 0.0058 | | | |
| 39 | F39 | c | 140 | 0.05 | 0.09 | 1.79 | 1.51 | 0.06 | 0.46 | 0.081 | 0.0030 | 0.052 | 0.0051 | | | |
| 40 | F40 | b | 140 | 0.05 | 0.22 | 0.88 | 0.16 | 0.18 | 0.95 | 0.068 | 0.0033 | 0.057 | 0.0056 | | | |
| 41 | F41 | c | 140 | 0.05 | 0.62 | 1.63 | 1.03 | 0.57 | 0.58 | 0.057 | 0.0039 | 0.051 | 0.0056 | | | |
| 42 | F42 | b | 160 | 0.06 | 0.32 | 1.54 | 1.21 | 0.11 | 0.38 | 0.062 | 0.0053 | 0.049 | 0.0054 | | | |
| 43 | F43 | a | 160 | 0.05 | 0.30 | 1.25 | 1.10 | 0.20 | 0.16 | 0.058 | 0.0025 | 0.033 | 0.0050 | | | 0.031 |
| 44 | F44 | a | 160 | 0.06 | 0.30 | 2.00 | 0.99 | 0.20 | 0.90 | 0.061 | 0.0008 | 0.052 | 0.0047 | | | |
| 45 | F45 | c | 160 | 0.07 | 0.25 | 1.63 | 1.27 | 0.20 | 1.53 | 0.060 | 0.0028 | 0.047 | 0.0058 | | | |
| 46 | F46 | b | 160 | 0.06 | 0.37 | 1.40 | 2.02 | 0.37 | 0.36 | 0.062 | 0.0031 | 0.062 | 0.0064 | | | |
| 47 | F47 | b | 160 | 0.06 | 0.36 | 1.38 | 1.06 | 0.38 | 0.37 | 0.038 | 0.0032 | 0.066 | 0.0066 | | | |
| 48 | F48 | a | 160 | 0.06 | 0.41 | 1.44 | 1.33 | 0.41 | 0.82 | 0.156 | 0.0028 | 0.038 | 0.0062 | | | |
| 49 | F49 | c | 160 | 0.05 | 0.22 | 1.47 | 0.86 | 0.21 | 0.46 | 0.081 | 0.0033 | 0.028 | 0.0156 | | | |
| 50 | F50 | b | 140 | 0.05 | 0.38 | 1.50 | 0.98 | 0.29 | 0.56 | 0.072 | 0.0032 | 0.103 | 0.0047 | 1.05 | | |
| 51 | F51 | b | 140 | 0.05 | 0.30 | 1.59 | 1.51 | 0.19 | 0.81 | 0.063 | 0.0034 | 0.051 | 0.0050 | | 0.42 | |

| | | | | | | | | | | | | | | | | |
|---|---|---|---|---|---|---|---|---|---|---|---|---|---|---|---|---|
| ** Remainder: Iron and unavoidable impurities | | | | | | | | | | | | | | | | |

**[Table 5]**

| Test No. | SR temperature (°C) | SR time (hr) | Average circle equivalent diameter of carbide (µm) | TS (MPa) | vE_₄₀ (J) |
|---|---|---|---|---|---|
| 1 | 620 | 8 | 0.51 | 655 | 80 |
| 2 | 620 | 8 | 0.62 | 642 | 75 |
| 3 | 620 | 8 | 0.63 | 705 | 71 |
| 4 | 620 | 8 | 0.54 | 651 | 77 |
| 5 | 620 | 8 | 0.52 | 672 | 77 |
| 6 | 620 | 2 | 0.68 | 709 | 70 |
| 7 | 600 | 10 | 0.53 | 651 | 78 |
| 8 | 620 | 8 | 0.62 | 644 | 71 |
| 9 | 620 | 8 | 0.61 | 641 | 72 |
| 10 | 620 | 8 | 0.56 | 691 | 73 |
| 11 | 600 | 8 | 0.62 | 657 | 72 |
| 12 | 620 | 8 | 0.68 | 627 | 63 |
| 13 | 620 | 8 | 0.71 | 633 | 68 |
| 14 | 650 | 5 | ⊚ | 624 | 65 |
| 15 | 620 | 8 | 0.72 | 633 | 65 |
| 16 | 620 | 8 | 0.73 | 715 | 61 |
| 17 | 620 | 8 | 0.50 | 711 | 64 |
| 18 | 620 | 8 | ⊚ | 625 | 84 |
| 19 | 620 | 8 | 0.66 | 635 | 64 |
| 20 | 620 | 8 | 0.68 | 718 | 62 |
| 21 | 650 | 5 | 0.72 | 635 | 65 |
| 22 | 620 | 8 | ⊚ | 645 | 68 |
| 23 | 620 | 8 | 0.62 | 697 | 81 |
| 24 | 620 | 2 | 0.55 | 684 | 66 |
| 25 | 680 | 5 | ⊚ | 685 | 68 |
| 26 | 650 | 2 | ⊚ | 707 | 66 |

**[Table 6]**

| Test No. | SR temperature (°C) | SR time (hr) | Average circle equivalent diameter of carbide (µm) | TS (MPa) | vE_₄₀ (J) |
|---|---|---|---|---|---|
| 27 | 650 | 5 | 0.42 | 713 | 62 |
| 28 | 620 | 8 | 0.59 | 689 | 66 |
| 29 | 620 | 8 | 0.68 | 716 | 62 |
| 30 | 620 | 8 | 0.45 | 700 | 80 |
| 31 | 620 | 8 | 0.50 | 685 | 76 |
| 32 | 620 | 8 | 0.76 | 618 | 57 |
| 33 | 620 | 8 | 0.82 | 616 | 53 |
| 34 | 620 | 8 | 0.77 | 663 | 58 |
| 35 | 690 | 8 | 0.77 | 624 | 56 |
| 36 | 620 | 14 | 0.78 | 631 | 55 |
| 37 | 620 | 8 | ⊚ | 615 | 51 |
| 38 | 620 | 8 | 0.76 | 765 | 36 |
| 39 | 620 | 8 | 0.81 | 615 | 56 |
| 40 | 620 | 8 | 0.68 | 604 | 52 |
| 41 | 620 | 8 | ⊚ | 667 | 41 |
| 42 | 680 | 2 | 0.63 | 752 | 50 |
| 43 | 620 | 8 | 0.57 | 624 | 49 |
| 44 | 650 | 5 | ⊚ | 613 | 43 |
| 45 | 620 | 2 | 0.56 | 749 | 54 |
| 46 | 620 | 8 | 0.56 | 699 | 58 |
| 47 | 620 | 8 | 0.57 | 641 | 42 |
| 48 | 620 | 8 | ⊚ | 730 | 39 |
| 49 | 650 | 5 | 0.57 | 737 | 34 |
| 50 | 650 | 5 | 0.51 | 736 | 52 |
| 51 | 620 | 8 | ⊚ | 755 | 50 |

In view of Tables 1 to 6, it can be considered as below. Test Nos. 1 to 31 are examples satisfying the constitutions defined in the present invention and it can be seen that weld metals having sufficient strength (TS > 620 MPa) and providing excellent low temperature toughness (vE-₄₀ > 60 J) can be obtained.

In contrast, Test Nos. 32 to 51 are examples which are out of any of the constitutions defined in the present invention. They are inferior in any one of the characteristics. Among them, in Test No. 32, heat input is higher than an appropriate range (heat input is 2.6 kJ/mm), in which the average circle equivalent diameter of grain boundary carbides is increased and the strength is insufficient, and low temperature toughness (vE-₄₀) is deteriorated. In Test No. 33, the preheating and interpass temperature is higher than the appropriate range (preheating and interpass temperature is 190°C), in which the average circle equivalent diameter of grain boundary carbide is increased, the strength is insufficient, and the low temperature toughness (vE-₄₀) is deteriorated.

In Test No. 34, a weld material having a ratio (metallic Si/SiO₂) of less than 0.90 is used, in which the average circle equivalent diameter of the grain boundary carbides is increased and the low temperature toughness (vE-₄₀) is deteriorated. In Test Nos. 35 and 36, SR annealing conditions (temperature, time) are out of appropriate ranges, in each of which the average circle equivalent diameter of the grain boundary carbides is increased and the low temperature toughness (vE-₄₀) is deteriorated.

In Test No. 37, the C content of the weld metal is insufficient and the Mn content is excessive, in which refinement of carbides is attained but the strength is insufficient and the low temperature toughness (vE-₄₀) is deteriorated. In Test No. 38, the C content and the Cr content of the weld metal are excessive, in which the average circle equivalent diameter of grain boundary carbides is increased and the low temperature toughness (vE-₄₀) is deteriorated.

In Test No. 39, the Si content and the Cr content of the weld metal are insufficient, in which the strength is insufficient, the average circle equivalent diameter of the grain boundary carbides is increased and the low temperature toughness (vE-₄₀) is deteriorated. In Test No. 40, the Mn content and the Ni content of the weld metal are insufficient, in which the strength is insufficient, the average circle equivalent diameter of the grain boundary carbides is increased and the low temperature toughness (vE-₄₀) is deteriorated.

In Test No. 41, the Si content in the weld metal is excessive due to high metallic Si content in the welding materials and the low temperature toughness (vE-₄₀) is deteriorated. In Test No. 42, the B content of the weld metal is excessive and the low temperature toughness (vE-₄₀) is deteriorated. In Test No. 43, the Al content as the selective component is excessive, in which the strength is insufficient and the low temperature toughness (vE-₄₀) is deteriorated.

In Test No. 44, the B content in the weld metal is insufficient, in which the strength is insufficient and the low temperature toughness (vE-₄₀) is deteriorated. In Test No. 45, the Mo content in the weld metal is excessive, in which the low temperature toughness (vE-₄₀) is deteriorated. In Test No. 46, the Ni content in the weld metal is excessive, in which the low temperature toughness (vE-₄₀) is deteriorated.

In Test No. 47, The Ti content in the weld metal is insufficient, in which the low temperature toughness (vE-₄₀) is deteriorated. In Test No. 48, the Ti content in the weld metal is excessive, in which the low temperature toughness (vE-₄₀) is deteriorated.

In Test No. 49, the O content in the weld metal is insufficient and the N content in the weld metal is excessive, in which the low temperature toughness (vE-₄₀) is deteriorated. In Test No. 50, the O content is excessive and the Cu content as the selective component is excessive in the weld metal, in which the low temperature toughness (vE-₄₀) is deteriorated. In Test No. 51, the V content in the weld metal is excessive, in which refinement of carbide is attained but the low temperature toughness (vE-₄₀) is deteriorated.

## Claims

1. A weld metal comprising:
C: 0.02 to 0.10% ("mass%" here and hereinafter),
Si: 0.10 to 0.60%,
Mn: 0.90 to 2.5%,
Ni: 0.20 to 2.00%,
Cr: 0.05 to 1.0%,
Mo: 0.10 to 1.50%,
Ti: 0.040 to 0.15%,
B: 0.0010 to 0.0050%,
O: 0.030 to 0.100%, and
N: 0.015% or less (excluding 0%) respectively,
with the remainder consisting of iron and unavoidable impurities,
wherein an average circle equivalent diameter of carbides having a circle equivalent diameter of 0.40 µm or more among the carbides present in the grain boundary of the weld metal is 0.75 µm or less.

2. The weld metal according to claim 1, wherein at least one of Cu: 1.0% or less (not including 0%) and V: 0.40% or less (not including 0%) is contained further as another element.

3. The weld metal according to claim 1, wherein Al: 0.030% or less (not including 0%) is contained further as another element.

4. The weld metal according to claim 2, wherein Al: 0.030% or less (not including 0%) is contained further as another element.

5. A welded structure provided with the weld metal according to any one of claims 1 to 4.
